# EUROPEAN PATENT SPECIFICATION

(11) **EP 1 915 024 B1**
(45) Date of publication and mention of the grant of the patent: **02.11.2011**
(21) Application number: 08150988.7
(22) Date of filing: 26.09.2002
(51) Int. Cl.: H04Q 11/04, H04L 29/06, H04L 12/56, H04L 29/14

(54) **Method and apparatus for optimization of redundant link usage using time sensitive paths**
Verfahren und Vorrichtung zur Optimierung der Ausnutzung einer redundanten Verbindung mit Hilfe von zeitkritischen Pfaden
Procédé et dispositif pour l'optimisation de l'utilisation d'une liaison redondante a l'aide de voies sensibles au temps

(30) Priority: 27.09.2001 US 325368 P; 22.05.2002 US 152857
(43) Date of publication of application: 23.04.2008
(62) Divisional of application: 02292369.2
(73) Proprietor: Alcatel Canada Inc., Kanata, ON K2K 2E6 (CA)
(72) Inventor: Soetemans, Joseph, Nepean Québec K2G 4K8 (CA); Pike, Dion, Stittsville Ontario K2S 1J6 (CA); Friesen, Larry, Nepean Ontario K2G 6P2 (CA); Labonte, Jean, Aylmer Québec J9J 2N9 (CA)
(74) Representative: Nicolle, Olivier

(56) References cited:
- WO-A-01/61909
- CA-A- 2 273 525
- IETF: "Framework for MPLS-based Recovery" INET, [Online] January 2001 (2001-01), XP002266404 Retrieved from the Internet: URL:http://www.watersprings.org/pub/id/dra ft-makam-mpls-recovery-frmwrk-01.txt> [retrieved on 2004-01-09]
- LI M J ET AL: "Two-fiber optical channel shared protection ring with 4x4 thermal-optic switches" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA: OSA, US, vol. 1 OF 4, 17 March 2001 (2001-03-17), pages TuO7-1-TuO7-3, XP010545801 ISBN: 1-55752-655-9
- TELECOMMUNICATION STANDARDIZATION SECTOR OF ITU: "Recommendation G.841 - Types and characteristics of SDH network protection architectures" ITU - INTERNATION TELECOMMUNICATION UNION, October 1998 (1998-10), pages 1-42, XP002275277
- "ITU-T Recommendation G.872: Architecture of optical transport networks" ITU-T RECOMMENDATION G.872, XX, XX, March 1999 (1999-03), pages 1-32, XP002224175
- WOLF-DIETER HAAß: "Handbuch der Kommunikationsnetze" 1997, SPRINGER , XP002275279 * pages 110-112; figures 2.47,2.48,2.49 *
- "CLOCK DISTRIBUTION ALGORTIHM FOR SYNCHRONIZATION NETWORK" IBM TECHNICAL DISCLOSURE BULLETIN, IBM CORP. NEW YORK, US, vol. 32, no. 8A, 1990, pages 17-20, XP000082683 ISSN: 0018-8689
- TELECOMMUNICATION STANDARDIZATION SECTOR OF ITU: "Recommendation G.810 - Definitions and terminology for synchronization networks" ITU - INTERNATIONAL TELECOMMUNICATION UNION, August 1996 (1996-08), XP002275278

## Description

The present invention relates to the field of network elements, and more particularly to a method and apparatus for optimization of redundant link usage in a multi-shelf network element.

### 1. Multi-Shelf Network Elements

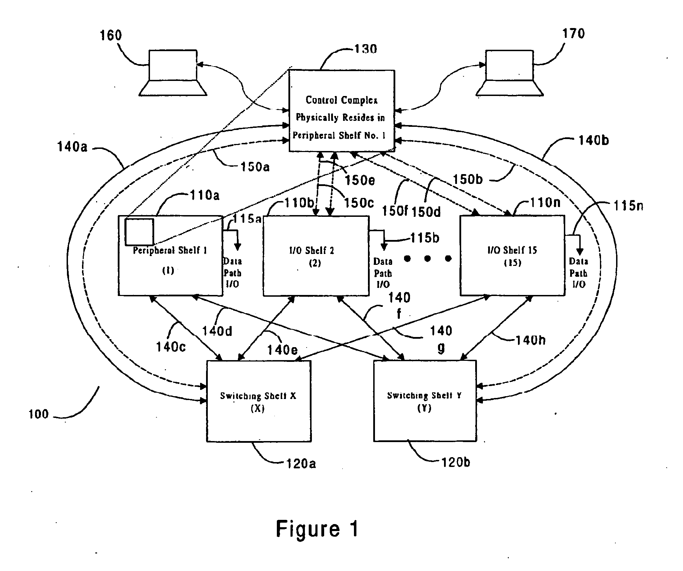

An example of a multi-shelf network element with which the present invention may be used is multi-shelf switch system 100 shown in schematic block form in Figure 1. Switch system 100 comprises peripheral shelves 110a-n, switching shelves 120a-b, and control complex 130. Peripheral shelves 110a-n provide input/output (I/O) interfaces for connection to data paths 115a-n for which switching services are provided by switch system 100. Switching shelves 120a-b provide the switching services for the system. Control complex 130 provides central management for the switch system. The various shelves of switch system 100 are interconnected by intershelf links 140a-h and 150a-f. An example embodiment of the switch system 100 of Figure 1 is the Alcatel 7670 Router Switch Platform (RSP) Multi-Shelf system (Alcatel 7670). The Alcatel 7670 is a multi-protocol backbone system designed to switch ATM cells and route IP traffic through the same switching fabric. Depending on its configuration, the Alcatel 7670 provides from 14.4 Gbps up to 450 Gbps of switching capacity.

In one embodiment of switch system 100 of Figure 1, each of switching shelves 120a-b contains a switching fabric core and up to 32 switch access cards (SAC), each providing 14.4 Gbps of cell throughput to and from the core. Switching shelves 120a-b are configured as a redundant pair and are referred to as switching shelf X and switching shelf Y.

LI M J et Al: "Two-fiber optical channel shared protection ring with 4x4 thermal-optic switches" Optical Fiber Communication Conference (OFC) Technical Digest Postconference Edition. Anaheim, CA, March 17-22, 2001, Trends in Optics and Photonics Series. TOPS. Volume 54, Whashington, WA: OSA, US, vol.1 of 4, pages TuO7-1-RuO7-3, discloses an experimental demonstration of a two-fiber OChSPRING. A new mode architecture design using 4x4 thermal-optic switch fabrics, a signalling protocol and a messaging channel transmitted through an optical supervisory channel, as well as control hardware and software are implemented.

Telecommunication Standardization Sector of ITU: "Recommendation G.841 - Types and Characteristics of SDH network protection architectures" Internation Telecommunication Union, October 1998, pages 1-42, discloses the necessary equipment-level specifications to implement different choices of protection architectures for Synchronous Digital Hierarchy (SDH) networks. Protected entities may range from a single SDH multiplex section, to a portion of an SDH end-to-end path, or to an entire SDH end-to-end path. Physical implementations of these protection architectures may include rings or linear chains of nodes. Each protection classification includes guidelines on network objectives, architecture, application functionality, switching criteria, protocols and algorithms.

In one embodiment, two types of peripheral shelves 110a-n may be used in switching system 100. The first type, called a high speed peripheral shelf (HSPS), comprises high speed line processing cards (HLPC) each providing 10 Gbps throughput, high speed I/O cards (HIOC), high speed fabric interface cards (HFIC) and two high speed shelf controllers (HSC). The second type, called simply a peripheral shelf (PS), comprises lower speed line processing cards (LPC) each providing 2.5 Gbps throughput, I/O Cards (IOC) and dual or quad port fabric interface cards (DFIC/QFIC). Each of peripheral shelves 110a-n also typically includes a shelf control system which may comprise control complex 130 (in the case of peripheral shelf 110a) or one or preferably two redundant peripheral shelf controllers (PSC).

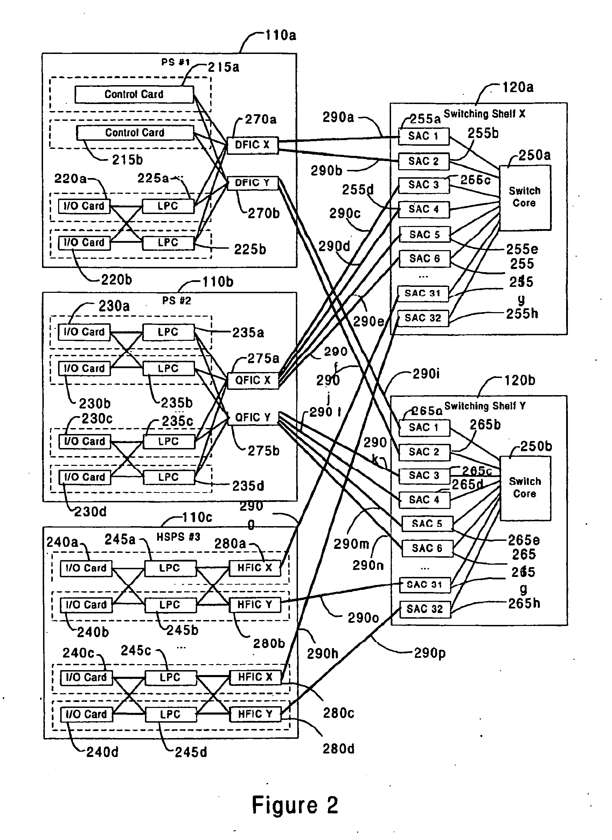

In one embodiment, switching shelves 120a-b connect to the peripheral shelves 110a-n in the system via fabric interface cards (FIC) to provide cell switching to the line processing cards (also referred to as "line cards") in the peripheral shelves. Examples of these connections are illustrated in Figure 2.

Figure 2 includes two switching shelves 120a (designated "switching shelf X") and 120b (designated "switching shelf Y") and three peripheral shelves: two normal speed peripheral shelves 110a (designated "PS1") and 110b (designated "PS2") and one high speed peripheral shelf 110c (designated "HSPS3"). In one embodiment, each of the peripheral shelves may comprise up to sixteen (16) line processing cards. In Figure 2, two line cards 225a-b are shown for peripheral shelf 110a, four line cards 235a-d for peripheral shelf 110b, and four high speed line cards 245a-d for high speed peripheral Shelf 110c. Each pair of line cards in each peripheral shelf communicate with an associated pair of I/O cards, which connect to the data stream for which switching services are being provided. Thus, in the embodiment of Figure 2, line cards 225a-b communicate with associated I/O cards 220a-b, line cards 235a-b communicate with I/O cards 230a-b, line cards 235c-d communicate with I/O cards 230c-d, high speed line cards 245a-b communicate with I/O cards 240a-b, and high speed line cards 245c-d communicate with I/O cards 240c-d. Each line card is also connected to two redundant fabric interface cards (FIC) which provide high speed connections between each line card and each switching shelf 120a and 120b. One of each pair of FIC's is designated FIC "X" and the other is designated FIC "Y". Three types of FIC's are shown in Figure 2. Peripheral shelf 110a contains two dual FIC's (DFIC) 270a and 270b. Peripheral shelf 110b contains two quad FIC's (QFIC) 275a-b, and high speed peripheral shelf 110c contains four high speed FIC's (HFIC) 280a-d.

In one embodiment, each switching shelf 120a-b comprises a switch core and up to 32 switching access cards (SAC). In the embodiment of Figure 2, switching shelf X 120a comprises switch core 250a and SAC's 255a-h, and switching shelf Y 120b comprises switch core 250b and SAC's 265a-h.

In one embodiment, the connections between the various components within a shelf are provided via one or more circuit boards in each shelf, referred to as "midplanes," to which the respective components are mounted.

In the embodiment of Figure 2, each "X"-designated FIC on a peripheral shelf is connected to one or more SAC's on switching shelf X 120a, and each "Y"-designated FIC on a peripheral shelf is connected to one or more SAC's on switching shelf Y 120b. A DFIC connects to up to two SAC's, a QFIC to up to four SAC's, and a HFIC to a single SAC. In the embodiment of Figure 2, the connection between the FIC's on a peripheral shelves 110a-c and the SAC's on switching shelves 120a-b is via high speed intershelf links (HISL) 290a-p, which carry the cell-switched data path traffic. Thus DFIC X 270a of peripheral shelf 110a is connected to SAC's 255a-b on switching shelf X 120a via HISL's 290a-b, and DFIC Y 270b of peripheral shelf 110a is connected to SAC's 265a-b on switching shelf Y 120b via HISL's 290i-j. Similarly, on peripheral shelf 110b, QFIC X 275a is connected to SAC's 255c-f on switching shelf X 120a via HISL's 290c-f, and QFIC Y 275b is connected to SAC's 265c-f on switching shelf Y 120b via HISL's 290k-n. Finally, on high speed peripheral shelf 110c, HFIC's X 280a and 280c are connected via HISL's 290g-h to SAC's 255g-h on switching shelf X 120a, and HFIC's Y 280b and 280d are connected via HISL's 290o-p to SAC's 265g-h on switching shelf Y 120b, respectively.

The switch cores 250a-b, SAC's 255a-h and 265a-h, HISL's 290a-p, and FIC's 270a-b, 275a-b and 280a-d comprise the system's "switching fabric."

In the switch system of Figures 1 and 2, peripheral shelf 110a, designated "Peripheral Shelf 1," contains control complex 130. In one embodiment, control complex 130 comprises a logical grouping of cards that provide the central management for all features of switch system 100. The local and remote user interfaces to the system are provided by control complex 130 via user terminals 160 and 170. In addition, control complex 130 maintains a database for all cards on the system. One embodiment of control complex 130 is illustrated in Figure 3.

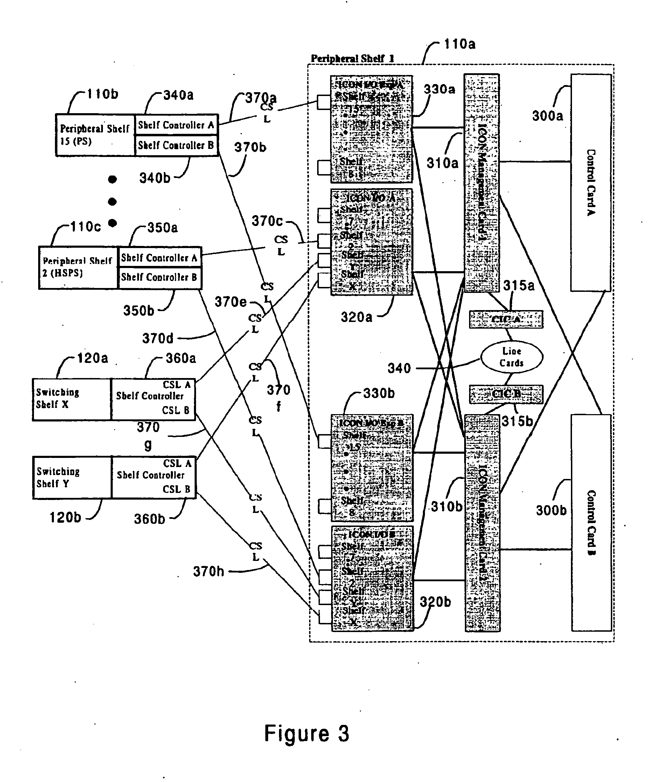

In the embodiment of Figure 3, control complex 130 comprises two control cards 300a-b (designated "Control Card A" and "Control Card B", respectively), two intershelf connection (ICON) cards 310a-b, two control interconnect (CIC) cards 315a-b, two intershelf connection I/O (ICON I/O) cards 320a-b, and two intershelf connection I/O expansion cards (ICON I/O Exp) 330a-b. Control complex 130 also comprises a facility card (FAC) that provides an RS232 management port and two timing ports that can be attached to a timing source for system synchronization. In addition to control complex 130, peripheral shelf 110a also comprises its own set of line processing cards 340 that communicate with control complex 130 via CIC cards 315a-b.

Control complex 130 communicates with each shelf in the switch system via shelf controllers on the peripheral and switching shelves. In the embodiment of Figure 3, peripheral shelf 110b comprises a redundant pair of shelf controllers 340a-b, high speed peripheral shelf 110c comprises a redundant pair of high speed shelf controllers 350a-b, and switching shelves 120a and 120b each comprise a switching shelf controller 360a and 360b, respectively.

ICON I/O cards 320a-b and ICON I/O Exp cards 330a-b provide interfaces for connecting control complex 130 to other shelves (such as peripheral I/O and switching shelves) in the switch system via physical connections. In one embodiment, these connections are referred to as Control Services Links (CSL) 370a-h. In the embodiment of Figure 3, each ICON I/O and ICON I/O Exp card contains eight CSL ports. ICON I/O A 320a and ICON I/O B 320b provide ports for CSL connections to the two switching shelves X and Y 120a-b and to the first six peripheral I/O shelves (designated peripheral shelves 2 to 7), while ICON I/O Exp A 330a and ICON I/O Exp B 330b provide ports for CSL connections to eight additional peripheral I/O shelves (designated peripheral shelves 8 to 15). ICON cards 310, ICON I/O cards 320, ICON I/O Exp cards 330, CSL's 370, and shelf controllers 340, 350 and 360 provide an intershelf connection (ICON) infrastructure that allows the transfer of control traffic between control complex 130 and the controllers and cards in peripheral shelves 110 and switching shelves 120 without using any bandwidth on the main data path. Data path traffic goes through the switching fabric shown in Figure 2 whereas the control traffic uses the out of band ICON infrastructure (also sometimes referred to as the "control infrastructure") of Figure 3 to transfer data. Operation of the control infrastructure is not affected by the switching fabric, and the switching fabric is not affected by the control infrastructure.

In one embodiment, a CSL link is physically embodied in a twelve-conductor cable comprising three separate, internal 4-conductor Cat-5-type cables. Each 4-conductor internal cable provides one of three different types of communications channels: a time division multiplexed (TDM) channel (providing E1-type capabilities), a full duplex (Ethernet) messaging channel, and a simplex differential channel.

The TDM channel (also sometimes referred to as the "E1 channel") is used by the ICON infrastructure to transport time sensitive transport activity, shelf numbering control and system timing information throughout the system. In one embodiment, the TDM channel operates at a frequency of 8000 Hz, providing 32 time slots with 8-bits per slot at a 125 microsecond refresh rate resulting in a data rate of 2.048 Mbps. In this embodiment, the TDM channel provides a guaranteed point-to-point channel between the ICON cards on peripheral shelf 1 and any shelf connected to one of peripheral shelf 1's CSL ports.

The full duplex messaging channel (also sometimes referred to as the "Ethernet channel") is used for general communications with any shelf in the system. In one embodiment, the Ethernet channel operates at 100 Mbps. Each Ethernet link to a shelf is shared among all components (cards) within the shelf. As a result, every element in the system is capable of communicating with the control complex via the Ethernet channel.

The Ethernet channel may be used for a large variety of communications, including connection information, software downloading to the individual components, debugging, alarm management, and configuration transfers. Communications between the control complex and the shelf controllers that does not travel over the TDM channel in general travels over the Ethernet channel.

The simplex differential channel (also sometimes referred to as the "RTS channel") is used to distribute a real time stamp (RTS) from the controller to each of the shelves in the system. The simplex differential channel is used instead of the TDM channel or the Ethernet channel because the RTS is sensitive to time delays that result from the applications running on the TDM and Ethernet channels. The RTS is used to align all elements of the system to the same time stamp for purposes such as debugging and billing. The RTS signal is generated by the control complex and is provided to the ICON cards via a direct circuit board (mid-plane) connection. The ICON cards are responsible for extracting the signal and transmitting it via the differential channel to all shelves in the system.

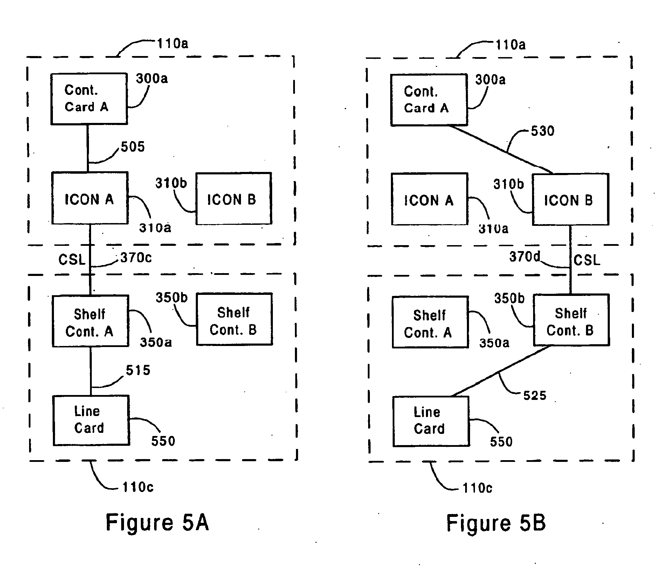

The use of redundant pairs of control cards and icon cards in peripheral shelf 1 and redundant shelf controllers in other peripheral I/O shelves creates redundant pathways over which control traffic can flow between each control card of the control complex in peripheral shelf 1 and each line card of each peripheral I/O shelf. Examples of redundant pathways between control card 300a and a line card 550 of high speed peripheral shelf 110c are shown in Figures 5a-b. For simplicity, only the main relevant components are shown in Figures 5a-b. For the same reason, the ICON I/O and ICON I/O Exp cards are not shown separately but are included as part of the respective ICON cards.

A first pathway, shown in Figure 5a, comprises midplane link 505 between control card A 330a and ICON card A 310c in peripheral shelf 1 110a, CSL link 370c between ICON card A 310c on peripheral shelf 1 110a and shelf controller A 350a on peripheral shelf 2 110c, and midplane link 515 between shelf controller A 350a and line card 550 on peripheral shelf 2 110c. A second pathway, shown in Figure 5b, comprises midplane link 530 between control card A 330a and ICON card B 310b on peripheral shelf 1 110a, CSL link 370d between ICON card B 310b on peripheral shelf 1 110a and shelf controller B 350b on peripheral shelf 2 110c, and midplane link 525 between shelf controller B 350b and line card 550 on peripheral shelf 2 110c.

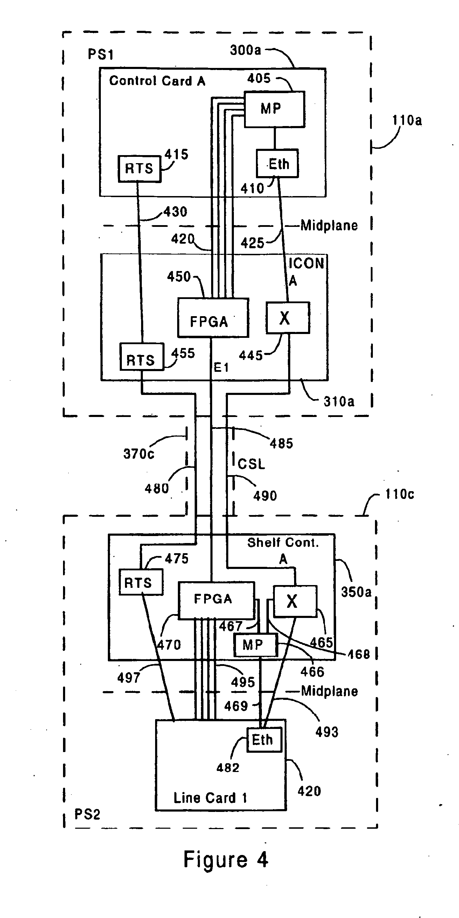

Figure 4 illustrates the control traffic flow of the pathway of Figure 5a. In the embodiment of Figure 4, controller card a 300a comprises a microprocessor 405, a real time stamp source 415, and an Ethernet port 410.

Microprocessor 405 exchanges time sensitive control data and normal control data with line card 420 on peripheral shelf 2 110c. Time sensitive control data travels over a set of "n" direct links 420 to a field programmable gate array (FPGA) 450 on ICON card A 310a. FPGA 450 assembles the data for transmission via TDM, and transmits the time sensitive data via E1 channel 485 of CSL 370c to FPGA 470 of shelf controller A 350a on peripheral shelf 2 110c. FPGA 470 extracts the time sensitive data for line card 420 from the TDM stream, and passes it via direct midplane links 495 to line card 420.

Normal control data, on the other hand, travels from microprocessor 405 to Ethernet port 410 of control card A 300a, and from there via midplane Ethernet link 425 to switch 445 of ICON card A 310a. Switch 445 passes the data via CSL Ethernet channel 490 to switch 465 on shelf controller A 350a of peripheral shelf 2 110c. Switch 465 in turn transmits the data to Ethernet port 482 on line card 420. A microprocessor 466 of shelf controller A 350a on peripheral shelf 2 110c is coupled to FPGA 470 via connection 467, switch 465 via connection 468, and Ethernet port 482 via connection 469, allowing microprocessor 466 access to the time sensitive data and the normal control data and/or allowing microprocessor 466 to exert control over the operations of FPGA 470, switch 465, and/or Ethernet port 482 (or, more generally, line card 420 via Ethernet port 482).

Real time stamp (RTS) source 415 may generate its own time signal, or may receive a time signal from an external source. RTS source 415 communicates its time signal via midplane link 430 to RTS transponder 455 on ICON card A 310a. RTS transponder 455 converts the time stamp into proper form for transmission over the differential channel of CLS 370a and sends it to RTS transponder 475 on shelf controller A 350a of peripheral shelf 2 110c. RTS transponder 475 extracts the RTS signal from CSL 370c's RTS channel and distributes it to line card 420 via midplane link 497.

Even though Figure 4 only shows the control data pathways between one control card and one ICON card, it will be understood that the same pathways exist between each control card and both of the ICON cards in peripheral shelf 1 110a.

### 2. APS Automatic Protection System

A common method used to prevent data communications interruptions is known as Automatic Protection Switching (APS) 1+1. In an APS 1+1 system, components are connected via redundant, mirrored links. Each transmitting component sends the identical data over both links, and each receiving component listens to both links. One of the links is the normal "work" link, while the other is the "protection" link. As long as the work link is operating properly, the receiving component processes the data received from that link and discards the data received via the protection link. However, if at any time the work link becomes inoperable or defective, the receiving component immediately begins processing the data received over the "protection" link. Both links must carry identical data so that no data loss occurs when such a switch is made.

APS is useful because it prevents communications failures resulting from a single link failure. However, it does so at the expense of bandwidth: because the same data is sent simultaneously over two separate links, the total bandwidth needed is twice the what is required by the data stream itself, even though the data transferred over the protection link is used only during the infrequent times when there is a failure of the work link, and is otherwise discarded.

The invention is defined by the appended independent claims.

The present invention comprises a method and apparatus for optimizing redundant link usage so as to allow a portion of the wasted bandwidth in a redundant link system to be utilized for additional data traffic without compromising the ability of the system to respond to and correct for a failure of a link. In one embodiment, two independent, individually addressable links are established between to endpoints. One of the links is selected as a nominal communication path, and the other as a standby communication path. The nominal communication path and standby communication path each comprise a time sensitive path and a normal path. Critical time sensitive traffic is sent via the nominal and standby time sensitive paths, while normal traffic is sent via the nominal normal path, and non-critical traffic is sent via the standby normal path. Other characteristics and advantages of the invention will appear on reading the following description of embodiments of the invention, given by way of example and with reference to the accompanying drawings, in which:
Figure 1 shows an embodiment of a multi-shelf network element.
Figure 2 shows a data path infrastructure of an embodiment of a multi-shelf network element.
Figure 3 shows a control data path infrastructure of an embodiment of a multi-shelf network element.
Figure 4 shows intershelf control data paths between two shelves of an embodiment of a multi-shelf network element.
Figures 5A and 5B show alternative redundant paths between two shelves of an embodiment of a multi-shelf network element.

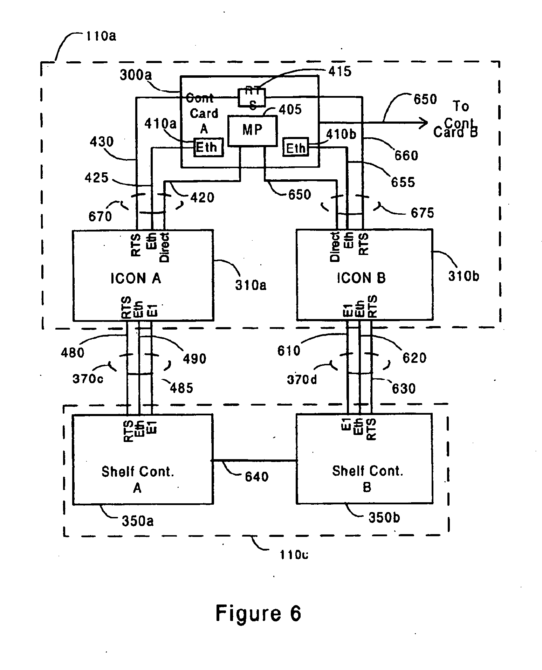

Figure 6 shows intershelf control data path connections between two shelves of a multi-shelf element in an embodiment of the invention.

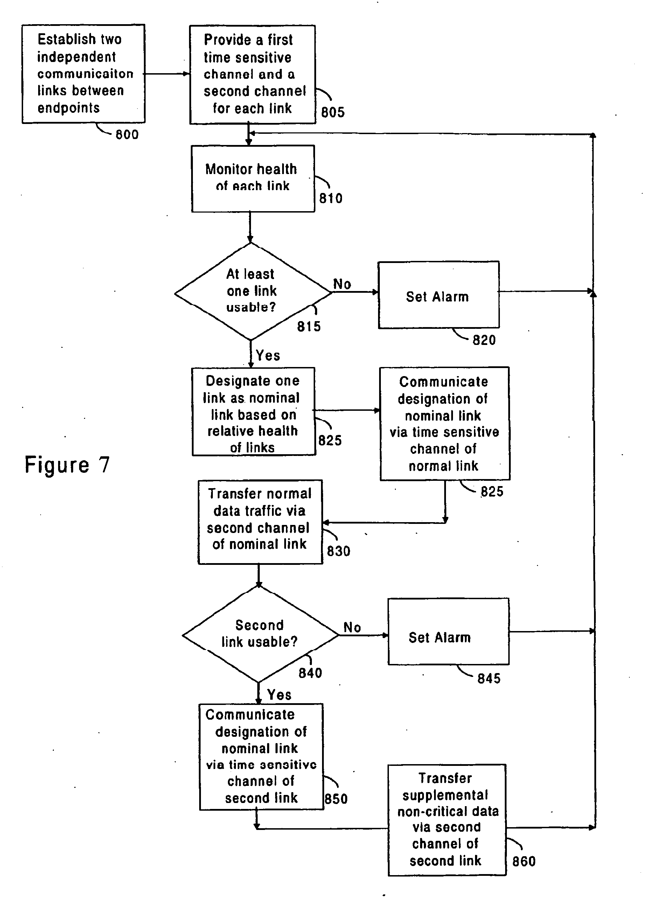

Figure 7 is a flow chart showing a process used to optimize redundant link usage in an embodiment of the invention.

A method and apparatus for optimizing redundant link usage in a multi-shelf network element is disclosed. In the following description, numerous specific details are set forth to provide a thorough description of the invention. However, it will be apparent to one skilled in the art that the invention may be practiced without these specific details. In other instances, well-known features have not been described in detail so as not to obscure the invention.

Figure 6 shows intershelf control data path connections between two shelves of a multi-shelf element in an embodiment of the invention. The left side of Figure 6 shows the control data path connections between control card A 300a in peripheral shelf 1 110a and shelf controller A 350a of peripheral I/O shelf 110c. These control data path connections are the same as those of Figure 4, in simplified form. In addition, the right side of Figure 6 shows a similar control data path between control card A 300a and shelf controller B 350b in peripheral I/O shelf 110c.

As shown in Figure 6, the control data path between control card A 300a and shelf controller A 350a includes an intrashelf control data path 670 between control card A 300a and ICON card A 310a and an intershelf CSL link 370c between ICON card A 310a and shelf controller A 350a. Similarly, the control data path between control card A 300a and shelf controller B 350b includes intrashelf control data path 675 between control card A 300a and ICON card B 310b and intershelf CSL link 370d between ICON card B 310b and shelf controller B 350b. Similar intrashelf control data paths (not shown in Figure 6) exist between control card B and ICON cards A 310a and B 310b. For clarity, they are not shown here. However, in the discussion below, it will be understood that the description of the operation of control card A applies to control card B as well.

Each of intrashelf paths 670 and 675 and CSL links 370c and 370d comprise three separate data channels: an RTS channel, an Ethernet channel, and a time sensitive data channel. Intrashelf path 670 includes an RTS channel 425, an Ethernet channel 425, and a direct multi-line channel 420. lntershelf CSL link 370c includes an RTS channel 480, an Ethernet channel 490, and a TDM/E1 channel 485. RTS channel 425 is connected through ICON A 310a to RTS channel 480, Ethernet channel 425 is connected to Ethernet channel 490, and multi-line channel 420 is connected to E1 channel 485.

Similarly, intrashelf path 675 includes RTS channel 660, Ethernet channel 655, and multi-line channel 650, while intershelf CSL link 370d includes RTS channel 630, Ethernet channel 620, and TDM/E1 channel 610. RTS channel 660 is connected through ICON B 310b to RTS channel 630, Ethernet channel 655 is connected to Ethernet channel 620, and multi-line channel 650 is connected to E1 channel 610.

In other embodiments, time sensitive data channels, for example, indirect multi-line channels, may be provided between a dual or quad fabric interface card (DFIC/QFIC) and each of control card A 300a, ICON card A 310a, and ICON card B 310b. Such channels may be provided in addition to, or in lieu of, direct multi-line channel 420 and multi-line channel 650.

The combination of intrashelf link 670 and intershelf link 370c forms a first three-channel communication path between control card A 300a and peripheral I/O shelf 110c. This first communication path will be referred to as communication path A. The combination of intrashelf link 675 and intershelf link 370d forms a second, independent three-channel communication path between control card A 300a and peripheral I/O shelf 110c. This second communication path will be referred to as communication path B. Control card A 300a is configured to allow it to individually address each of communication paths A and B.

A concept that is relevant to the embodiment of Figure 6 is the "health" of a communication path or link. The health of a link refers to the ability of the link to carry traffic without data degradation or loss.

In the embodiment of Figure 6, the health of communication paths A and B are continually monitored both by shelf controllers 350a and 350b on peripheral I/O shelf 110c and by control card A 300a on peripheral shelf 1 110a. The health of a link is determined by examining the data coming over each channel of the link to determine the amount of data loss or degradation. The relative health of a link is then determined according to preset criteria. Different weight may be assigned to the contribution by each channel to the overall health of a link. For example, in one embodiment, the state of the channel that carries the most critical and/or time-sensitive data (e.g., in the embodiment of Figure 6, the TDM/E1 channel) carries the greatest weight, while the channel that carries the least critical data (e.g. in the embodiment of Figure 6, the RTS channel), is given the least weight. In one embodiment that uses a three channel link like CSL links 370c-d of Figure 6, the RTS channel is given no weight at all in calculating the overall health of the link - the health is determined solely based on the conditions of the TCM/E1 and Ethernet channels.

The relative health of two available communication paths or links between two endpoints (such as, for example, control card A 300a and peripheral I/O shelf 110c in Figure 6) can be used to choose one of the two communication paths as a "nominal path" and the other as a "standby path." The nominal path may be used to transfer the normal data traffic between endpoints, while the "standby path" is kept available to carry the normal data traffic should the health of the "nominal path" deteriorate.

Various paradigms can be used for selection of the "nominal" and "standby" paths. In the embodiment of Figure 6, the responsibility for selection of the "nominal" path is normally assigned to shelf controllers 350a-b of peripheral I/O shelf 110c, who communicate with each other over link 640, and who, together, can be considered to comprise a shelf control complex for peripheral I/O shelf 110c. Each of shelf controllers 350a-b monitors the health of the particular CSL link that it is connected to. That is, shelf controller A 350a monitors the health of CSL link 370c and shelf controller B 350b monitors the health of CSL link 370d. The shelf controllers negotiate among themselves based on the relative health of their respective CSL links to determine which link at any time is selected as the "nominal" link and which as the "standby" link. In addition, if a CSL link to a shelf controller deteriorates below a minimum threshold, the shelf controller may designate the link as being inoperative. Furthermore, in certain circumstances, for example if one of the links is being shut down for service, control card A may send a request to the shelf controllers to designate a particular link as the "nominal" link. However, in the embodiment of Figure 6, the final decision rests with the shelf controllers.

The identity at any point in time of the "nominal" link constitutes critical, time sensitive information. For example, a control card such as control card A 330a uses the identity of the nominal link to determine which path to use for data traffic. In one embodiment, the data identifying the nominal link is simultaneously sent by both shelf controllers via the respective TDM/E1 channels of their respective CSL links to the control cards to ensure that the identity of the nominal link is known, preferably at all times, by the control cards. Sending data regarding the current nominal path via the TDM/E1 channels of both CSL links allows the control card to be instantly informed of a switch in the nominal link, even if the previous link, including its TDM/E1 channel is completely severed. The control card can instantly redirect the normal data traffic to the standby link with little to no loss of data. It should be noted that the normal data traffic is considered to be "path independent" between the endpoints (i.e. control card A 300a and peripheral I/O shelf 110c). That is, it does not matter whether communication path A or communication path B is used - all that matters is that the data is transferred between endpoints.

In the embodiment of Figure 6, because TDM/E1 channels of CSL links 370c and 370d allow control card A to be instantly informed of a switch in the nominal link, it is not necessary, as in traditional APS schemes, for the normal data traffic over the Ethernet channel of the nominal link to be mirrored over the Ethernet channel of the standby link. As a result, the Ethernet channel of the standby link is available to carry additional data traffic. However, because the Ethernet channel of the standby link may at any time be called into use should a switch in the nominal link be commanded by the shelf controllers, such additional data traffic should normally constitute supplemental, non-critical data. Examples of such non-critical data include diagnostic data concerning the various elements and components in the standby path, and non-time critical software upgrades for elements and components in the standby path. Such data can be considered "path dependent" because it comprises data intended not for the endpoints, but for elements along a particular path.

Figure 7 is a flow chart showing a process used to optimize redundant link usage in an embodiment of the invention. Two independent links between endpoints are established at step 800. At step 805, each of the two channels are provided with a time sensitive channel (for example, the TDM/E1 channel of the embodiment of Figure 6) and a second channel (for example the Ethernet channel of the embodiment of Figure 6). The health of each link is monitored at step 810, which may include separately monitoring the health of each channel of each link. At step 815 a determination is made as to whether the health of at least one link is sufficient to be currently usable. If it is determined that no link is currently usable, an alarm is set at step 820 and the process resumes monitoring the health of the links at step 810.

If it is determined at step 815 that at least one link is currently usable, then one link is designated as the nominal link based on the relative health of the links at step 825. The designation of that link as the nominal link is communicated between endpoints via the time sensitive channel of the nominal link at step 830, and normal data traffic is transferred between endpoints via the second channel of the nominal link at step 835.

At step 840, a determination is made as to whether the health of the second link is sufficient to render it currently usable. If the second link is not found to be usable, an alarm is set at step 845 and the process returns to monitoring the health of the links at step 810. If the second link is found to be usable, the designation of the nominal link (which is sent via the time sensitive channel of the nominal link at step 830) is also sent via the time sensitive channel of the second link at step 850. In addition, supplemental, non-critical traffic is transferred between endpoints via the second channel of the second link at step 860. Thereafter the process returns to step 810.

Thus, a method and apparatus of optimizing redundant link usage in a multi-shelf network element has been presented. Although the invention has been described using certain specific examples, it will be apparent to those skilled in the art that the invention is not limited to these few examples. For example, although the invention has been described with respect to use in a multi-shelf network element, the invention may be used for optimization of redundant link usage within and between other communicating devices. Other embodiments utilizing the inventive features of the invention will be apparent to those skilled in the art, and are encompassed herein.

## Claims

1. A method for transferring data between endpoints of a communications system comprising a first shelf (110a) comprising a control complex (130) and a second shelf (110c) comprising first (350a) and second (350b) shelf controllers, said control complex (130) being a first endpoint and said second shelf (110c) being a second endpoint, **characterized in that** said method comprises the steps of:
- establishing (800) at least two redundant pathways between said endpoints;
- providing (805) a time sensitive communications channel and a second communications channel for each of said pathways ;
- transferring (825, 850) data identifying a first of said pathways as a nominal pathway between said endpoints via said time sensitive channel of said first pathway and via said time sensitive channel of said second pathway;
- transferring critical time sensitive traffic between said endpoints via said time sensitive channel of said pathway identified as nominal and via said time sensitive channel of said pathway not identified as nominal ;
- transferring (830) normal data between said endpoints via said second channel of said pathway identified as nominal;
- transferring (860) supplemental data between said endpoints via said second channel of said pathway not identified as nominal.

2. A method according to claim 1 wherein said time sensitive channel comprises a point-to-point communications protocol.

3. A method according to any one of claims 1 or 2 wherein said time sensitive channel comprises a time division multiplexed channel.

4. A method according to any one of claims 1 to 3 further comprising a step of monitoring (810) a health of each of said pathways; wherein
the step of selecting said nominal pathway is based on said health of said pathways.

5. A method according to claims 1 to 4 wherein said control complex (130) comprises a first shelf (110a) which comprises one control card (300a) and first and second intershelf connection cards (310a, 310b), and said second shelf (110c) further comprising a line card (550), and
wherein the first redundant pathway being formed by a link between the control card (300a) and the first intershelf connection card (310a), a link between the first intershelf connection card (310a) and the first shelf controller (350a), a link between the first shelf controller (350a) and the line card (550) ;
the second redundant pathway being formed by a link between the control card (300a) and the second intershelf connection card (310b), a link between the second intershelf connection card (310b) and the second shelf controller (350b), a link between the second shelf controller (350b) and the line card (550).

6. A method according to claim 5, wherein said normal data comprises data independent of the links from which said first pathway is formed.

7. A method according to claims 5 or 6 wherein said supplemental data comprises data dependent on the links from which said second pathway is formed.

8. A method according to any one of claims 5 to 7 further comprising the step of transferring data dependent on the links from which said first pathway is formed via said time sensitive channel of said first pathway.

9. A method according to any one of claims 5 to 8 further comprising the step of transferring data dependent on the links from which said second pathway is formed via said time sensitive channel of said second pathway.

10. A method according to any one of claims 5 to 9 further comprising the step of transferring data dependent on the links from which said first pathway is formed via said second channel of said first pathway.

11. A method according to any one of claims 1 to 10 further comprising the steps of:
providing a third channel for each of said pathways ;
transferring a time signal via said third channel of said first pathway.

12. A method according to claim 11 further comprising the step of transferring a time signal via said third channel of said second pathway.

13. A multi-shelf network element **characterized in that** it comprises:
- a first shelf (110a) comprising a control complex (130);
- a second shelf (110c) comprising first (350a) and second (350b) shelf controllers, said control complex (130) being a first endpoint and said second shelf (110c) being a second endpoint;
- two redundant pathways between said endpoints, said redundant pathways each comprising a time sensitive communications channel and a second channel ;
- means for transferring (825, 850) data identifying a first of said pathways as a nominal pathway between said endpoints via said time sensitive channel of said first pathway and via said time sensitive channel of said second pathway ;
- means for transferring critical time sensitive traffic between said endpoints via said time sensitive channel of said pathway identified as nominal and via said time sensitive channel of said pathway not identified as nominal ;
- means for transferring (830) normal data between said endpoints via said second channel of said pathway identified as nominal;
- means for transferring (860) supplemental data between said endpoints via said second channel of said pathway not identified as nominal.

14. A multi-shelf network element according to claim 13 wherein said time sensitive channel comprises a point-to-point communications protocol.

15. A multi-shelf network element according to any one of claims 13 or 14 wherein said time sensitive channel comprises a time division multiplexed channel.

16. A multi-shelf network element according to claims 13 to 15 wherein said control complex (130) comprises a first shelf (110a) which comprises one control card (300a) and first and second intershelf connection cards (310a, 310b), and said second shelf (110c) further comprising a line card (550),
and wherein the first redundant pathway being formed by a link between the control card (300a) and the first intershelf connection card (310a), a link between the first intershelf connection card (310a) and the first shelf controller (350a), a link between the first shelf controller (350a) and the line card (550) ;
the second redundant pathway being formed by a link between the control card (300a) and the second intershelf connection card (310b), a link between the second intershelf connection card (310b) and the second shelf controller (350b), a link between the second shelf controller (350b) and the line card (550).

17. A multi-shelf network element according to claim 16 wherein said means for transferring (830) normal data between said endpoints via said second channel of said first pathway, are configured to transmit at least data independent of the links from which said first pathway is formed.

18. A multi-shelf network element according to any one of claims 16 to 17 wherein means for transferring (860) supplemental data between said endpoints via said second channel of said second pathway, are configured to transmit at least data dependent on the links from which said second pathway is formed.

19. A multi-shelf network element according to any one of claims 16 to 18 wherein it comprises means for transferring data dependent on the links from which said first pathway is formed via said time sensitive channel of said first pathway..

20. A multi-shelf network element according to any one of claims 16 to 19 wherein it further comprises means for transferring data dependent on the links from which said second pathway is formed via said time sensitive channel of said second pathway.

21. A multi-shelf network element according to any one of claims 16 to 20 wherein means for transferring (830) normal data between said endpoints via said second channel of said first pathway, are configured to transmit at least data dependent on the links from which said first pathway is formed.

22. A multi-shelf network element according to any one of claims 13 to 21 wherein each of said first and second pathways each comprise a third channel, said multi-shelf network element comprising means for transferring a time signal via said third channel of said first pathway.

23. A multi-shelf network element according to claim 22 wherein said multi-shelf network element comprises means for transferring a time signal via said third channel of said second pathway.

## Patentansprüche

1. Verfahren zum Übertragen von Daten zwischen Endpunkten eines Kommunikationssystems, welches einen ersten Baugruppenrahmen (110a) mit einem Steuerkomplex (130) und einen zweiten Baugruppenrahmen (110c) mit einem ersten (350a) und einem zweiten (350b) Baugruppenrahmen-Controller umfasst, wobei der besagte Steuerkomplex (130) ein erster Endpunkt ist und der besagte zweite Baugruppenrahmen (110c) ein zweiter Endpunkt ist, **dadurch gekennzeichnet, dass** das Verfahren die folgenden Schritte umfasst:
- Einrichten (800) von mindestens zwei redundanten Pfaden zwischen den besagten Endpunkten;
- Bereitstellen (805) eines zeitsensitiven Kommunikationskanals und eines zweiten Kommunikationskanals für einen jeden der besagten Pfade;
- Übertragen (825, 850) von Daten, welche einen ersten der besagten Pfade als einen Soll-Pfad zwischen den besagten Endpunkten identifizieren, über den besagten zeitsensitiven Kanal des besagten ersten Pfades und über den besagten zeitsensitiven Kanal des besagten zweiten Pfades;
- Übertragen von kritischem zeitsensitivem Verkehr zwischen den besagten Endpunkten über den besagten zeitsensitiven Kanal des besagten als Soll-Pfad identifizierten Pfades und über den besagten zeitsensitiven Kanal des besagten nicht als Soll-Pfad identifizierten Pfades;
- Übertragen (830) von normalen Daten zwischen den besagten Endpunkten über den besagten zweiten Kanal des besagten als Soll-Pfad identifizierten Pfades;
- Übertragen (860) von zusätzlichen Daten zwischen den besagten Endpunkten über den besagten zweiten Kanal des besagten nicht als Soll-Pfad identifizierten Pfades.

2. Verfahren nach Anspruch 1, wobei der besagte zeitsensitive Kanal ein Punkt-zu-Punkt-Kommunikationsprotokoll umfasst.

3. Verfahren nach einem beliebigen der Ansprüche 1 oder 2, wobei der besagte zeitsensitive Kanal einen Zeitmultiplexkanal umfasst.

4. Verfahren nach einem beliebigen der Ansprüche 1 bis 3, weiterhin umfassend einen
Schritt des Überwachens (810) einer Integrität eines jeden der besagten Pfade; wobei
der Schritt des Auswählens des besagten Soll-Pfades auf der besagten Integrität des besagten Pfades basiert.

5. Verfahren nach den Ansprüchen 1 bis 4, wobei der besagte Steuerkomplex (130) einen ersten Baugruppenrahmen (110a) umfasst, welcher eine Steuerkarte (300a) und eine erste und eine zweite Baugruppenrahmen-Verbindungskarte (310a, 310b) umfasst, und wobei der besagte zweite Baugruppenrahmen (110c) weiterhin eine Leitungskarte (550) umfasst, und
wobei der erste redundante Pfad von einem Link zwischen der Steuerkarte (300a) und der ersten Baugruppenrahmen-Verbindungskarte (310a), einem Link zwischen der ersten Baugruppenrahmen-Verbindungskarte (310a) und dem ersten Baugruppenrahmen-Controller (350a), einem Link zwischen dem ersten Baugruppenrahmen-Controller (350a) und der Leitungskarte (550) gebildet wird;
wobei der zweite redundante Pfad von einem Link zwischen der Steuerkarte (300a) und der zweiten Baugruppenrahmen-Verbindungskarte (310b), einem Link zwischen der zweiten Baugruppenrahmen-Verbindungskarte (310b) und dem zweiten Baugruppenrahmen-Controller (350b), einem Link zwischen dem zweiten Baugruppenrahmen-Controller (350b) und der Leitungskarte (550) gebildet wird.

6. Verfahren nach Anspruch 5, wobei die besagten normalen Daten von den Links, ab welchen der besagte erste Pfad gebildet wird, unabhängige Daten umfassen.

7. Verfahren nach den Ansprüchen 5 oder 6, wobei die zusätzlichen Daten von den Links, ab welchen der besagte zweite Pfad gebildet wird, abhängige Daten umfassen.

8. Verfahren nach einem beliebigen der Ansprüche 5 bis 7, weiterhin umfassend den Schritt des Übertragens von von den Links, ab welchen der besagte erste Pfad gebildet wird, abhängigen Daten über denselben zeitsensitiven Kanal des besagten ersten Pfades.

9. Verfahren nach einem beliebigen der Ansprüche 5 bis 8, weiterhin umfassend den Schritt des Übertragens von von den Links, ab welchen der besagte zweite Pfad gebildet wird, abhängigen Daten über den besagten zeitsensitiven Kanal des besagten zweiten Pfades.

10. Verfahren nach einem beliebigen der Ansprüche 5 bis 9, weiterhin umfassend den Schritt des Übertragens von von den Links, ab welchen der besagte erste Pfad gebildet wird, abhängigen Daten über den besagten zweiten Kanal des besagten ersten Pfades.

11. Verfahren nach einem beliebigen der Ansprüche 1 bis 10, weiterhin umfassend die folgenden Schritte:
Bereitstellen eines dritten Kanals für einen jeden der besagten Pfade;
Übertragen eines Zeitsignals über den besagten dritten Kanal des besagten ersten Pfades.

12. Verfahren nach Anspruch 11, weiterhin umfassend den Schritt des Übertragens eines Zeitsignals über den besagten dritten Kanal des besagten zweiten Pfades.

13. Mehrfachbaugruppenrahmen-Netzwerkelement, **dadurch gekennzeichnet, dass** es umfasst:
- Einen ersten Baugruppenrahmen (110a) mit einem Steuerkomplex (130);
- einen zweiten Baugruppenrahmen (110c) mit einem ersten (350a) und einem zweiten (350b) Baugruppenrahmen-Controller, wobei der besagte Steuerkomplex (130) ein erster Endpunkt ist und der besagte zweite Baugruppenrahmen (110c) ein zweiter Endpunkt ist;
- zwei redundante Pfade zwischen den besagten Endpunkten, wobei ein jeder der redundanten Pfade einen zeitsensitiven Kommunikationskanal und einen zweiten Kanal umfasst;
- Mittel zum Übertragen (825, 850) von Daten, welche einen ersten der besagten Pfade als einen Soll-Pfad zwischen den besagten Endpunkten identifizieren, über den besagten zeitsensitiven Kanal des besagten ersten Pfades und über den besagten zeitsensitiven Kanal des besagten zweiten Pfades;
- Mittel zum Übertragen von kritischem zeitsensitivem Verkehr zwischen den besagten Endpunkten über den besagten zeitsensitiven Kanal des besagten als Soll-Pfad identifizierten Pfades und über den besagten zeitsensitiven Kanal des besagten nicht als Soll-Pfad identifizierten Pfades;
- Mittel zum Übertragen (830) von normalen Daten zwischen den besagten Endpunkten über den besagten zweiten Kanal des besagten als Soll-Pfad identifizierten Pfades;
- Mittel zum Übertragen (860) von zusätzlichen Daten zwischen den besagten Endpunkten über den besagten zweiten Kanal des nicht als Soll-Pfad identifizierten Pfades.

14. Mehrfachbaugruppenrahmen-Netzwerkelement nach Anspruch 13, wobei der besagte zeitsensitive Kanal ein Punkt-zu-Punkt-Kommunikationsprotokoll umfasst.

15. Mehrfachbaugruppenrahmen-Netzwerkelement nach einem beliebigen der Ansprüche 13 oder 14, wobei der besagte zeitsensitive Kanal einen Zeitmultiplexkanal umfasst.

16. Mehrfachbaugruppenrahmen-Netzwerkelement nach den Ansprüchen 13 bis 15, wobei der besagte Steuerkomplex (130) einen ersten Baugruppenrahmen (110a) umfasst, welcher eine Steuerkarte (300a) und eine erste und eine zweite Baugruppenrahmen-Verbindungskarte (310a, 310b) umfasst, und wobei der besagte zweite Baugruppenrahmen (110c) weiterhin eine Leitungskarte (550) umfasst,
und wobei der erste redundante Pfad von einem Link zwischen der Steuerkarte (300a) und der ersten Baugruppenrahmen-Verbindungskarte (310a), einem Link zwischen der ersten Baugruppenrahmen-Verbindungskarte (310a) und dem ersten Baugruppenrahmen-Controller (350a), einem Link zwischen dem ersten Baugruppenrahmen-Controller (350a) und der Leitungskarte (550) gebildet wird;
wobei der zweite redundante Pfad von einem Link zwischen der Steuerkarte (300a) und der zweiten Baugruppenrahmen-Verbindungskarte (310b), einem Link zwischen der zweiten Baugruppenrahmen-Verbindungskarte (310b) und dem zweiten Baugruppenrahmen-Controller (350b), einem Link zwischen dem zweiten Baugruppenrahmen-Controller (350b) und der Leitungskarte (550) gebildet wird.

17. Mehrfachbaugruppenrahmen-Netzwerkelement nach Anspruch 16, wobei die besagten Mittel zum Übertragen (830) von normalen Daten zwischen den besagten Endpunkten über den besagten zweiten Kanal des besagten ersten Pfades für die Übertragung von von den Links, ab welchen der erste Pfad gebildet wird, unabhängigen Daten konfiguriert sind.

18. Mehrfachbaugruppenrahmen-Netzwerkelement nach einem beliebigen der Ansprüche 16 bis 17, wobei die Mittel zum Übertragen (860) von zusätzlichen Daten zwischen den besagten Endpunkten über den besagten zweiten Kanal des besagten zweiten Pfades für die Übertragung von mindestens von den Links, ab welchen der besagte zweite Pfad gebildet wird, abhängigen Daten konfiguriert ist.

19. Mehrfachbaugruppenrahmen-Netzwerkelement nach einem beliebigen der Ansprüche 16 bis 18, weiterhin umfassend Mittel zum Übertragen von von den Links, ab welchen der besagte erste Pfad gebildet ist, abhängigen Daten über den besagten zeitsensitiven Kanal des besagten ersten Pfades.

20. Mehrfachbaugruppenrahmen-Netzwerkelement nach einem beliebigen der Ansprüche 16 bis 19, weiterhin umfassend Mittel zum Übertragen von von den Links, ab welchen der besagte zweite Pfad gebildet wird, abhängigen Daten über den besagten zeitsensitiven Kanal des besagten zweiten Pfades.

21. Mehrfachbaugruppenrahmen-Netzwerkelement nach einem beliebigen der Ansprüche 16 bis 20, wobei die Mittel zum Übertragen (830) von normalen Daten zwischen den besagten Endpunkten über den besagten zweiten Kanal des besagten ersten Pfades für die Übertragung von mindestens von den Links, ab welchen der besagte erste Pfad gebildet wird, abhängigen Daten konfiguriert sind.

22. Mehrfachbaugruppenrahmen-Netzwerkelement nach einem beliebigen der Ansprüche 13 bis 21, wobei der besagte erste und der besagte zweite Pfad jeweils einen dritten Kanal umfassen, wobei das besagte Mehrfachbaugruppenrahmen-Netzwerkelement Mittel zum Übertragen eines Zeitsignals über den besagten dritten Kanal des ersten Pfades umfasst.

23. Mehrfachbaugruppenrahmen-Netzwerkelement nach Anspruch 22, wobei das besagte Mehrfachbaugruppenrahmen-Netzwerkelement Mittel zum Übertragen eines Zeitsignals über den besagten dritten Kanal des besagten zweiten Pfades umfasst.

## Revendications

1. Procédé de transfert de données entre des points terminaux d'un système de communication comprenant une première étagère (110a) comprenant un complexe de commande (130) et une deuxième étagère (110c) comprenant un premier (350a) et un deuxième (350b) contrôleurs d'étagères, ledit complexe de commande (130) étant un premier point terminal et ladite deuxième étagère (110c) étant un deuxième point terminal, **caractérisé en ce que** ledit procédé comprend les étapes suivantes :
- établir (800) au moins deux chemins redondants entre lesdits points terminaux ;
- prévoir (805) un canal de communication temporaire et un deuxième canal de communication pour chacun desdits chemins ;
- transférer (825, 850) des données identifiant un premier desdits chemins comme un chemin nominal entre lesdits points terminaux par l'intermédiaire dudit canal temporaire dudit premier chemin et par l'intermédiaire dudit canal temporaire dudit deuxième chemin ;
- transférer un trafic temporaire critique entre lesdits points terminaux par l'intermédiaire dudit canal temporaire dudit chemin identifié comme nominal et par l'intermédiaire dudit canal temporaire dudit chemin non identifié comme nominal ;
- transférer (830) des données normales entre lesdits points terminaux par l'intermédiaire dudit deuxième canal dudit chemin identifié comme nominal ;
- transférer (860) des données supplémentaires entre lesdits points terminaux par l'intermédiaire dudit deuxième canal dudit chemin non identifié comme nominal.

2. Procédé selon la revendication 1 dans lequel ledit canal temporaire comprend un protocole de communication point à point.

3. Procédé selon l'une quelconque des revendications 1 et 2 dans lequel ledit canal temporaire comprend un canal multiplexé par répartition dans le temps.

4. Procédé selon l'une quelconque des revendications 1 à 3 comprenant en outre une étape de surveillance (810) d'un état de santé de chacun desdits chemins ; dans lequel l'étape de sélection dudit chemin nominal est basée sur ledit état de santé desdits chemins.

5. Procédé selon les revendications 1 à 4 dans lequel ledit complexe de commande (130) comprend une première étagère (110a) qui comprend une carte de commande (300a) et une première et une deuxième cartes de connexion inter-étagères (310a, 310b), et ladite deuxième étagère (110c) comprenant en outre une carte de ligne (550), et
dans lequel le premier chemin redondant est formé par une liaison entre la carte de commande (300a) et la première carte de connexion inter-étagères (310a), une liaison entre la première carte de connexion inter-étagères (310a) et le premier contrôleur d'étagères (350a), une liaison entre le premier contrôleur d'étagères (350a) et la carte de ligne (550) ;
le deuxième chemin redondant étant formé par une liaison entre la carte de commande (300a) et la deuxième carte de connexion inter-étagères (310b), une liaison entre la deuxième carte de connexion inter-étagères (310b) et le deuxième contrôleur d'étagères (350b), une liaison entre le deuxième contrôleur d'étagères (350b) et la carte de ligne (550).

6. Procédé selon la revendication 5, dans lequel lesdites données normales comprennent des données indépendantes des liaisons à partir desquelles ledit premier chemin est formé.

7. Procédé selon la revendication 5 ou 6, dans lequel lesdites données supplémentaires comprennent des données dépendantes des liaisons à partir desquelles ledit deuxième chemin est formé.

8. Procédé selon l'une quelconque des revendications 5 à 7 comprenant en outre l'étape de transfert de données dépendantes des liaisons à partir desquelles ledit premier chemin est formé par l'intermédiaire dudit canal temporaire dudit premier chemin.

9. Procédé selon l'une quelconque des revendications 5 à 8 comprenant en outre l'étape de transfert de données dépendantes des liaisons à partir desquelles ledit deuxième chemin est formé par l'intermédiaire dudit canal temporaire dudit deuxième chemin.

10. Procédé selon l'une quelconque des revendications 5 à 9 comprenant en outre l'étape de transfert de données dépendantes des liaisons à partir desquelles ledit premier chemin est formé par l'intermédiaire dudit deuxième canal dudit premier chemin.

11. Procédé selon l'une quelconque des revendications 1 à 10 comprenant en outre les étapes suivantes :
fournir un troisième canal pour chacun desdits chemins ;
transférer un signal de temps par l'intermédiaire dudit troisième canal dudit premier chemin.

12. Procédé selon la revendication 11 comprenant en outre l'étape de transfert d'un signal de temps par l'intermédiaire dudit troisième canal dudit deuxième chemin.

13. Élément de réseau à multiples étagères **caractérisé en ce qu'**il comprend :
- une première étagère (110a) comprenant un complexe de commande (130) ;
- une deuxième étagère (110c) comprenant un premier (350a) et un deuxième (350b) contrôleurs d'étagères, ledit complexe de commande (130) étant un premier point terminal et ladite deuxième étagère (110c) étant un deuxième point terminal ;
- deux chemins redondants entre lesdits points terminaux, lesdits chemins redondants comprenant chacun un canal de communication temporaire et un deuxième canal ;
- moyens pour transférer (825, 850) des données identifiant un premier desdits chemins comme un chemin nominal entre lesdits points terminaux par l'intermédiaire dudit canal temporaire dudit premier chemin et par l'intermédiaire dudit canal temporaire dudit deuxième chemin ;
- moyens pour transférer un trafic temporaire critique entre lesdits points terminaux par l'intermédiaire dudit canal temporaire dudit chemin identifié comme nominal et par l'intermédiaire dudit canal temporaire dudit chemin non identifié comme nominal ;
- moyens pour transférer (830) des données normales entre lesdits points terminaux par l'intermédiaire dudit deuxième canal dudit chemin identifié comme nominal ;
- moyens pour transférer (860) des données supplémentaires entre lesdits points terminaux par l'intermédiaire dudit deuxième canal dudit chemin non identifié comme nominal.

14. Élément de réseau à multiples étagères selon la revendication 13 dans lequel ledit canal temporaire comprend un protocole de communication point à point.

15. Élément de réseau à multiples étagères selon l'une quelconque des revendications 13 et 14 dans lequel ledit canal temporaire comprend un canal multiplexé par répartition dans le temps.

16. Élément de réseau à multiples étagères selon les revendications 13 à 15 dans lequel ledit complexe de commande (130) comprend une première étagère (110a) qui comprend une carte de commande (300a) et une première et une deuxième cartes de connexion inter-étagères (310a, 310b), et ladite deuxième étagère (110c) comprenant en outre une carte de ligne (550),
et dans lequel le premier chemin redondant est formé par une liaison entre la carte de commande (300a) et la première carte de connexion inter-étagères (310a), une liaison entre la première carte de connexion inter-étagères (310a) et le premier contrôleur d'étagères (350a), une liaison entre le premier contrôleur d'étagères (350a) et la carte de ligne (550) ;
le deuxième chemin redondant étant formé par une liaison entre la carte de commande (300a) et la deuxième carte de connexion inter-étagères (310b), une liaison entre la deuxième carte de connexion inter-étagères (310b) et le deuxième contrôleur d'étagères (350b), une liaison entre le deuxième contrôleur d'étagères (350b) et la carte de ligne (550).

17. Élément de réseau à multiples étagères selon la revendication 16 dans lequel lesdits moyens pour transférer (830) des données normales entre lesdits points terminaux par l'intermédiaire dudit deuxième canal dudit premier chemin, sont configurés pour transmettre au moins des données indépendantes des liaisons à partir desquelles ledit premier chemin est formé.

18. Élément de réseau à multiples étagères selon l'une quelconque des revendications 16 et 17 dans lequel des moyens pour transférer (860) des données supplémentaires entre lesdits points terminaux par l'intermédiaire dudit deuxième canal dudit deuxième chemin, sont configurés pour transmettre au moins des données dépendantes des liaisons à partir desquelles ledit deuxième chemin est formé.

19. Élément de réseau à multiples étagères selon l'une quelconque des revendications 16 à 18 dans lequel l'élément comprend des moyens pour transférer des données dépendantes des liaisons à partir desquelles ledit premier chemin est formé par l'intermédiaire dudit canal temporaire dudit premier chemin.

20. Élément de réseau à multiples étagères selon l'une quelconque des revendications 16 à 19 dans lequel l'élément comprend en outre des moyens pour transférer des données dépendantes des liaisons à partir desquelles ledit deuxième chemin est formé par l'intermédiaire dudit canal temporaire dudit deuxième chemin.

21. Élément de réseau à multiples étagères selon l'une quelconque des revendications 16 à 20 dans lequel des moyens pour transférer (830) des données normales entre lesdits points terminaux par l'intermédiaire dudit deuxième canal dudit premier chemin, sont configurés pour transmettre au moins des données dépendantes des liaisons à partir desquelles ledit premier chemin est formé.

22. Élément de réseau à multiples étagères selon l'une quelconque des revendications 13 à 21 dans lequel chacun desdits premier et deuxième chemins comprend un troisième canal, ledit élément de réseau à multiples étagères comprenant des moyens pour transférer un signal de temps par l'intermédiaire dudit troisième canal dudit premier chemin.

23. Élément de réseau à multiples étagères selon la revendication 22 dans lequel ledit élément de réseau à multiples étagères comprend des moyens pour transférer un signal de temps par l'intermédiaire dudit troisième canal dudit deuxième chemin.
